# EUROPEAN PATENT APPLICATION

(11) **EP 0 530 880 A1**
(43) Date of publication of application: **10.03.1993**
(21) Application number: 92202457.5
(22) Date of filing: 10.08.1992
(51) Int. Cl.: A23F 3/42, A23L 1/221, A23F 3/34, A23F 3/32

(54) **Tea aroma preparation**

(30) Priority: 29.08.1991 GB 9118467
(71) Applicant: UNILEVER N.V., NL-3013 AL Rotterdam (NL); UNILEVER PLC, London EC4P 4BQ (GB)
(72) Inventor: Bhatia, Rajni, Sharnbrook, Bedford MK44 ILQ (GB); Hoogstad, Bruin,, NL-3133 AT Vlaardingen (GB)
(74) Representative: Roscoe, Brian Corrie

(57) **Abstract**

Tea leaf material is contacted with water vapour under distillation conditions and the emanating mixture of water vapour and aroma and/or flavour volatiles is condensed by contacting it with cold, tea solids comprising material. The flavour concentrate can be used as aromatizing substance for tea or other ingestible material or as agglomerating agent for tea and the like.

## Description

The present invention relates to a process of preparing a tea volatiles comprising tea concentrate from tea leaf material in which tea leaf material is contacted with water vapour under distillation conditions and the obtained mixture of water vapour and tea flavour and/or flavour and/or aroma constituents is condensed. The present invention also relates to a process of aromatizing tea material with a tea volatiles concentrate obtained by the process according to the present invention.

It is known from United States Patent US-B-3,689,278 (Standard Brands Inc.) to prepare a distillate of flavour and aroma constituents of tea by subjecting dried tea leaf to steam distillation using either wet or dry steam in a column or an agitated bed, for instance in a screw conveyor. When the tea leaf material is in a column, the tea may be wetted prior to its being subjected to distillation conditions. The steam then contacts the admixture of tea and water and causes percolation and refluxing, which strips the volatile flavour and aroma constituents of the tea. The distillates are collected or condensed at a temperature in the range of from about 1.7°C to about 100°C. At these collection temperatures the desirable aroma and flavour constituents are said to be obtained. The distillates may in turn be subjected to another distillation step. The collected distillate or condensate are then mixed with soluble tea solids, as least a portion of which is spray dried tea, to provide an aqueous mixture with at least 20% weight of tea solids. At least part of the tea solids may be a freeze concentrated tea extract. After the mixture of distillates and soluble tea solids is prepared, the mixture is frozen and freeze dried.

A disadvantage of this known method is the relatively long contact time of the steam with the leaf material, which impairs the quality of the heat-sensitive aroma substances. This contact time according to the parent patent, United States Patent US-B-3,554,761, is 30-90 minutes, preferably about 60 minutes. Moreover the described condensation also leads to a loss in flavour and aroma constituents, because the non-condensable portion of the aroma and flavour constituents is lost.

Sometimes tea aroma and/or flavour components are recovered from a steam-stripping condensate by extraction with organic solvents which lateron need to be removed without leaving any traces in the aromatizing and/or flavouring substances, which is a cumbersome procedure.

The recovery of flavour and/or aroma components from tea leaf material by extraction with (super)critical liquefied gases is a rather expensive process requiring high-pressure equipment.

It has now been found that the disadvantages of these prior art methods can be prevented by a relatively simple extraction process with high yields of a high quality flavouring and/or aromatizing concentrate. More specifically, it has been found that if tea leaf material is subjected to a relatively short-time treatment with steam under distillation conditions, and the water vapour and the tea flavour and/or aroma constituents obtained are contacted with cold, tea solids comprising material, a high quality tea volatiles comprising concentrate is obtained.

Without in any way being bound to a theory, it is assumed that the tea solids present in the cold, tea solids comprising material act as a kind of adsorption nuclei for the tea flavour and/or aroma constituents present in the mixture with steam obtained from the treatment of the tea leaf material with the steam.

Therefore, according to the present invention, there is provided a process of preparing a tea volatiles comprising tea concentrate from tea leaf material in which tea leaf material is contacted with water vapour under distillation conditions and the obtained mixture of water vapour and tea flavour and/or aroma constituents is condensed, in which the condensation is effected by contacting the mixture of water vapour and tea flavour and/or aroma constituents obtained with cold, tea solids comprising material.

By "tea leaf material" is to be understood throughout this specification and the attached claims black tea leaves, green tea leaves, yellow tea leaves, herb leaf material, and mixtures thereof, which tea leaf material can also at least partially be comminuted or pretreated, for example with enzymes like cellulase and/or pectinase or any other chemical, physical or physico-chemical treatment.

The water vapour used in the treatment of the tea leaf material may be either wet or dry steam and it may comprise gases of a previous treatment of tea leaf material or other gases emanating from a tea processing operation such as withering or firing tea leaf material, as well as moistened inert gases like nitrogen, carbon dioxide, and mixtures thereof. The inert gas or gas mixture preferably has a relative humidity of at least 95%.

The tea leaf material may be either in dry or in wet condition. If the tea leaf material is wetted, this may be effected in a manner known per se with water in an amount of for example up to 25 percent by weight based on the dry tea leaf material. The moistening of the tea leaf material may also at least partially be effected with an aqueous solution of tea solids or an aqueous extract of herbs or mixtures of such solutions and extracts.

The contacting of the tea leaf material with water vapour under distillation conditions may be effected in a manner known per se, such as in a column, in an agitated or fluidized bed, continuously or discontinuously, but preferably in a closed system with an arrangement for recirculation, such as for example a closed mixer with steam jacket. The contact time of the tea leaf material with the water vapour is preferably at most 20 minutes, more preferably at most 10 minutes, and most preferably about 5 minutes.

The obtained mixture of water vapour and tea flavour and/or aroma constituents is contacted with cold, tea solids comprising material, which preferably is flakes of frozen tea-extract, but may also be a mixture of flakes of frozen tea extract and flaked water ice, or an aqueous tea solids comprising slurry or solution.

By "cold" is to be understood throughout this specification and the attached claims having a temperature of at most 20°C, preferably at most 10°C.

The cold, tea solids comprising material may comprise ice particles and preferably the cold, tea solids comprising material comprises particles of a frozen aqueous concentrated tea extract, preferably having a tea solids concentration of up to 50% by weight, preferably of from 10% to 40% by weight. The cold, tea solids comprising material preferably contains at least 0.5 percent by weight of tea solids, but particularly good results are obtained if the cold, tea solids comprising material has a tea solids content of from 10 to 30 percent by weight.

The cold, tea solids comprising material may additionally comprise flavouring agents, aromatizing agents, herb extract, and mixtures thereof.

The tea volatiles comprising tea concentrate which is obtained can be further concentrated, e.g. by using membrane techniques, such as reverse osmosis or by freezing processes. Also additional tea aromatizing and/or flavouring agents or maltodextrins, gums, and the like may be added before the tea volatiles comprising tea concentrate is used or further processed.

The present invention also relates to a process of aromatizing tea material, which is characterized by contacting the tea material with an aromatizing or flavouring amount of a tea volatiles concentrate obtained by the process according to the present invention.

The tea material to be aromatized may be leaf tea material, decaffeinated leaf tea material, dried tea solids, ice tea mixtures, ingestible tea comprising material, and mixtures thereof.

The tea volatiles concentrate obtained by the process according to the present invention is preferably used in liquid form, but it may also be freeze-dried or encapsulated or adsorbed into an ingestible material, like maltodextrins.

The tea volatiles comprising tea concentrate obtained by the process according to the present invention may also be used to flavour any ingestible material which does not contain tea.

Hence, the present invention also relates to a process of aromatizing and/or flavouring ingestible material, which is characterized by combining the ingestible material with an aromatizing and/or flavouring amount of a tea volatiles concentrate obtained by the process according to the present invention.

Finally a tea volatiles comprising tea concentrate obtained by the process according to the present invention as such, or in a more concentrated form, may be used as an agglomerating agent in the preparation of an agglomerated, powdered tea extract or an agglomerated decaffeinated tea dust, or an agglomerated ice tea mixture.

Therefore the present invention also relates to a process of agglomerating powdered tea extract, decaffeinated tea dust or ice tea mixture, which is characterized by using a tea volatiles concentrate obtained by the process according to the present invention as an agglomerating agent.

The invention will now be illustrated by the following examples:

### Example I

2.2 kg of black leaf tea was moistened to a moisture content of 8% to 15% by weight and subsequently contacted with dry steam of 100°C for 2 minutes in a column of diameter
219 mm and height 200 mm. The resulting mixture (in total 150 ml) of steam and aroma and flavour constituents was condensed onto flakes of a frozen aqueous tea extract having a tea solids content of 21% by weight and a temperature of 0°C.
The obtained concentrated, aromatized tea comprising aqueous slurry was subsequently combined with 90% of flakes of a frozen aqueous tea extract having a tea solids content of 21% by weight and the obtained mixture was freeze-dried.
The freeze-dried product was assessed by an experienced tea taste panel and it was found that the product had a significantly more tea, bitter and "green" aroma and flavour and a more astringent mouthfeel and more tea after taste than a commercially available instant tea product (Brooke Bond PG instant tea; Trade Mark).

### Example II

Example I was repeated, but now the mixture of steam and aroma and flavour constituents was condensed onto a mixture of 8% by weight of flakes of a frozen aqueous tea extract having a tea solids content of 21% by weight and 92% by weight of water ice flakes.
The obtained, concentrated, aromatized tea comprising slurry was subsequently combined with 90% by weight of flakes of a frozen aqueous tea extract, having a tea solids content of 21% by weight and the obtained mixture was freeze dried.
The freeze-dried product was assessed by an experienced tea taste panel and it was found that the product had a significantly more tea, bitter and green aroma and flavour, and a more astringent mouthfeel and a more tea after taste than a commercially available instant tea product (Brooke Bond PG instant tea; Trade Mark).
It was also found that in varying the amount of flakes of a frozen aqueous tea extract in the mixture with water ice flakes in a range from 3% to 10% by weight, a concentrated aromatized tea of excellent flavouring properties was obtained.

### Comparative Examples

(A) The same black leaf tea as in Example I was moistened and contacted with steam as described in Example I, and the resulting mixture of steam and aroma and flavour constituents was condensed onto flaked water ice (no tea solids being present). The obtained aroma/flavour condensate was subsequently combined with 90% by weight of flakes of a frozen aqueous tea extract, having a tea solids content of 21% by weight and the mixture was freeze-dried.

The freeze-dried product was assessed by the same experienced tea taste panel as in Examples I and II and it was found that the product was not significantly different from the commercially available instant tea product as mentioned in Example I. Particularly the product according to this Example A was considered to be lacking in the green fresh notes.
This comparative example (A) shows the necessity of the presence of tea solids in the cold condensing medium for the mixture of steam and aroma and flavour constituents.
(B) The same black leaf tea as in Example I was moistened and contacted with steam as in Example I and the resulting mixture of steam and aroma and flavour constituents was first condensed using an annular condenser and iced water of 0°C as a coolant. The obtained condensate was then combined with 93-94% by weight of flakes of a frozen aqueous tea extract having a tea solids content of 21% by weight and the mixture was freeze-dried.

The freeze-dried product was assessed by the same experienced tea taste panel as in Examples I and II and it was found that the product was not significantly different from the commercially available instant tea product as mentioned in Example I. Particularly it was not only lacking in green, fresh notes, but it was also lacking in tea aroma and flavour.
This comparative example (b) clearly shows that only a direct condensation in a tea solids comprising condensing medium leads to the desired high quality products.

### Example III

37 kg of black leaf tea were treated with moistened nitrogen gas (100% relative humidity) at 80°C in closed mixer which could be heated by means of a steam jacket. The mixture of nitrogen gas, water vapour and volatile flavour and aroma constituents obtained was condensed onto flakes of a frozen aqueous tea extract, having a tea solids content of 20.5% by weight and a temperature of 0°C. In total 1500 ml of condensate were obtained from 37 kg of black leaf tea. The obtained concentrated, aromatized tea comprising aqueous slurry was subsequently treated as described in Example I. The freeze-dried particulate product which was finally obtained was of the same excellent quality as that obtained in Example I.

## Claims

1. A process of preparing a tea volatiles comprising tea concentrate from tea leaf material, in which tea leaf material is contacted with water vapour under distillation conditions and the obtained mixture of water vapour and tea flavour and/or aroma constituents is condensed, characterized in that the condensation is effected by contacting the mixture of water vapour and tea flavour and/or aroma constituents with cold, tea solids comprising material.

2. A process according to claim 1, characterized in that the tea leaf material is selected from the group consisting of black tea leaves, green tea leaves, yellow tea leaves, herb leaf material, and mixtures thereof.

3. A process according to claim 1, characterized in that the tea leaf material is pretreated with cellulase and/or pectinase.

4. A process according to claim 1, characterized in that the water vapour comprises gases emanating from a tea processing operation.

5. A process according to claim 1, characterized in that the water vapour is in the form of a moistened inert gas.

6. A process according to claim 1, characterized in that the water vapour is in the form of moistened nitrogen, carbon dioxide, or mixtures thereof, having a relative humidity of at least 95%.

7. A process according to claim 1, characterized in that the tea leaf material comprises up to 25 percent by weight, based on dry tea leaf material, of moisture.

8. A process according to claim 1, characterized in that the tea leaf material is contacted with the water vapour for at most 20 minutes.

9. A process according to claim 1, characterized in that the tea leaf material is contacted with the water vapour for at most 10 minutes.

10. A process according to claim 1, characterized in that the tea leaf material is contacted with the water vapour for at most 5 minutes.

11. A process according to claim 1, characterized in that the cold, tea solids comprising material comprises particles selected from the group consisting of water ice particles, frozen aqueous tea extract particles, and mixtures thereof, and has a temperature of at most 20°C.

12. A process according to claim 1, characterized in that the cold, tea solids comprising material is frozen aqueous tea extract particles comprising up to 50 percent by weight of tea solids.

13. A process according to claim 1, characterized in that the cold, tea solids comprising material is frozen aqueous tea extract particles comprising from 10% to 40% by weight of tea solids.

14. A process according to claim 1, characterized in that the cold, tea solids comprising material has a tea solids content of at least 0.5 percent by weight.

15. A process according to claim 1, characterized in that the cold, tea solids comprising material has a tea solids content of from 10 to 30 percent by weight.

16. A process according to claim 1, characterized in that the cold, tea solids comprising material also comprises a substance selected from the group consisting of: aromatizing agents, flavouring agents, herb extract, and mixtures thereof.

17. A tea volatiles concentrate whenever prepared by the processes claimed in any one of claims 1-16.

18. A process of aromatizing and/or flavouring tea material, characterized by contacting tea material selected from the group consisting of leaf tea material, decaffeinated leaf tea material, dried tea solids, ice tea mixtures, ingestible tea comprising material and mixtures thereof, with an aromatizing and/or flavouring amount of a tea volatiles concentrate whenever prepared by the process as claimed in any one of claims 1-16.

19. Aromatized and/or flavoured tea material whenever prepared by the process as claimed in Claim 18.

20. A process of aromatizing and/or flavouring ingestible material, characterized in that the ingestible material is combined with an aromatizing and/or flavouring amount of a tea volatiles concentrate whenever prepared by the process as claimed in any one of Claims 1-16.

21. Aromatizing and/or flavoured ingestible material whenever prepared by the process as claimed in Claim 20.

22. A process of agglomerating powdered tea extract, decaffeinated tea dust, or ice tea mixture, characterized in that a tea volatiles concentrate whenever prepared by the process as claimed in any one of claims 1-16 is used as an agglomerating agent.

23. Agglomerated powdered tea extract, decaffeinated tea dust or ice tea mixture, whenever prepared by the process as claimed in Claim 22.
